# EUROPÄISCHE PATENTSCHRIFT

(11) **EP 3 323 793 B1**
(45) Veröffentlichungstag und Bekanntmachung des Hinweises auf die Patenterteilung: **31.10.2018**
(21) Anmeldenummer: 16199239.1
(22) Anmeldetag: 17.11.2016
(51) Int. Cl.: C04B 35/03, C04B 35/105, C04B 35/48, C04B 35/04, C04B 35/443, C04B 35/622, C04B 35/626, C01F 5/02, C04B 35/64

(54) **VERFAHREN ZUR BEHANDLUNG VON FEUERFESTEN KERAMISCHEN ERZEUGNISSEN**
METHOD FOR TREATING REFRACTORY CERAMIC PRODUCTS
PROCÉDÉ DE TRAITEMENT DES PRODUITS EN CÉRAMIQUES REFRACTAIRES

(43) Veröffentlichungstag der Anmeldung: 23.05.2018
(73) Patentinhaber: Refractory Intellectual Property GmbH & Co. KG, 1100 Wien (AT)
(72) Erfinder: Klitzsch, Michael, 8700 Leoben (AT); Geith, Martin, 8700 Leoben (AT); Budna, Karl, 8010 Graz (AT); Nievoll, Josef, 1060 Wien (AT)
(74) Vertreter: Berkenbrink, Kai-Oliver

(56) Entgegenhaltungen:
- GB-A- 861 931
- JP-A- 2013 126 927
- US-A- 4 140 745

## Beschreibung

Die Erfindung betrifft ein Verfahren zur Behandlung von feuerfesten keramischen Erzeugnissen. Der Begriff "feuerfestes keramisches Erzeugnis" oder "feuerfestes keramisches Produkt" im Sinne der Erfindung bezeichnet insbesondere feuerfeste keramische Erzeugnisse mit einer Einsatztemperatur von über 600°C und bevorzugt feuerfeste Werkstoffe gemäß DIN 51060:2000-6, also Werkstoffe mit einem Kegelfallpunkt größer SK 17. Die Ermittlung des Kegelfallpunktes kann insbesondere gemäß DIN EN 993-12:1997-06 erfolgen.
Feuerfeste keramische Erzeugnisse werden beispielsweise auch zur Ausmauerung von Drehrohröfen zum Brennen von Zementklinker ("Zementdrehrohröfen") verwendet. Während des Brennprozesses in solchen Zementdrehrohröfen entstehen gasförmige Substanzen, insbesondere beispielsweise auch gasförmige Substanzen in Form von Alkali- oder Erdalkalisalzen, die in den Porenraum der feuerfesten Ausmauerung des Drehrohrofens eindringen. Die gasförmigen Substanzen kondensieren teilweise im Porenraum, so dass der Porenraum der feuerfesten Ausmauerung allmählich mit dem Kondensat dieser gasförmigen Substanzen, also insbesondere Alkali- und Erdalkalisalzen, zugesetzt beziehungsweise verunreinigt wird.

Nach einer gewissen Betriebsdauer des Zementdrehrohrofens ist dessen feuerfeste Ausmauerung so stark verschlissen, dass diese aus dem Zementdrehrohrofen ausgebrochen und durch eine neue Ausmauerung aus feuerfesten keramischen Erzeugnissen ersetzt werden muss. Bei feuerfesten keramischen Erzeugnissen, die üblicherweise zur Ausmauerung der Brennzonen von Zementdrehrohröfen verwendet werden, handelt es sich regelmäßig um feuerfeste keramische Erzeugnisse auf Basis Magnesia (MgO), also um hochwertige feuerfeste keramische Erzeugnisse. Um die für die Herstellung solch feuerfester keramischer Erzeugnisse benötigte Magnesia zu gewinnen, werden üblicherweise Rohstoffe auf Basis Magnesit, also Magnesiumcarbonat (MgCO₃) verwendet. Solche Rohstoffe auf Basis Magnesit werden zur Herstellung von Magnesia calciniert, also derart mit Temperatur beaufschlagt, dass der Magnesit in Magnesia und Kohlenstoffdioxid (CO₂) zerfällt, wobei die Magnesia anschließend zu einem feuerfesten keramischen Erzeugnis auf Basis Magnesia weiter verarbeitet wird und das Kohlenstoffdioxid als Abgas in die Atmosphäre abgegeben wird. Zur Herstellung eines Rohstoffes auf Basis Magnesia, aus welchem feuerfeste keramische Erzeugnisse auf Basis Magnesia hergestellt werden können, ist damit zum einen Energie zur Calcinierung des Magnesits aufzuwenden. Zum anderen belastet dieser Calcinierprozess die Umwelt durch die Abgabe von Kohlenstoffdioxid in die Atmosphäre.
Vor diesem Hintergrund wäre es wünschenswert, aus einem Zementdrehrohrofen ausgebrochene feuerfeste keramische Erzeugnisse auf Basis Magnesia rezyklieren beziehungsweise zur Herstellung von neuen feuerfesten keramischen Erzeugnissen auf Basis Magnesia wieder verwenden zu können.

Dies ist auf Grund der vorstehend dargelegten Verunreinigung dieses Ausbruchs mit Alkali- und Erdalkalisalzen jedoch problematisch, da diese Salze die Eigenschaften eines neuen feuerfesten keramischen Erzeugnisses, das unter Verwendung solchen Ausbruchmaterials hergestellt worden ist, verschlechtern können.

Es hat daher nicht an Versuchen gefehlt, feuerfeste keramische Erzeugnisse auf Basis Magnesia, die mit Alkali- und Erdalkalisalzen belastet sind, derart zu behandeln, dass das danach erhaltene Erzeugnis als Rohstoff für die Herstellung von neuen feuerfesten keramischen Erzeugnissen auf Basis Magnesia wieder verwendet werden kann.

Beispielsweise wurde versucht, solches Ausbruchmaterial dadurch zu behandeln, dass dieses derart mit Temperatur beaufschlagt wurde, dass die im Porenraum vorhandenen Alkali- und Erdalkalisalze abdampfen. Allerdings erwiesen sich die dabei gasförmig emittierten Alkali- und Erdalkalisalze als derart korrosiv, dass die Abgasleitungen entsprechender Behandlungsaggregate mit sehr kostspieligen Filteranlagen zur Abgasreinigung versehen werden mussten, um die Emissionsgrenzen einhalten zu können.

Gemäß einer alternativen Behandlungsmethode wurde versucht, Ausbruch aus Zementdrehrohröfen auf Basis von Magnesia dadurch zu rezyklieren, dass dieser in einem Elektroofen eingeschmolzen wurde. Allerdings waren auch hierbei kostspielige Filteranlagen zur Abgasreinigung in den Abgasleitungen notwendig. Ferner ist ein solcher Schmelzprozess in einem Elektroofen in Anbetracht des Schmelzpunktes von Magnesia (ca. 2.800°C) mit einem sehr hohen Energieeinsatz verbunden.

Der Erfindung liegt die Aufgabe zu Grunde, ein Verfahren zur Behandlung eines feuerfesten keramischen Erzeugnisses auf Basis Magnesia, welche Verunreinigungen mit Alkali- und Erdalkalisalzen aufweist, zur Verfügung zu stellen, durch welches der Anteil an solchen Alkali- und Erdalkalisalzen in dem Erzeugnis reduziert werden kann. Eine weitere Aufgabe der Erfindung ist es, ein solches Verfahren zur Verfügung zu stellen, bei dessen Anwendung es nicht zu Entstehung von gasförmigen Alkali- und Erdalkalisalzen kommt. Eine weitere Aufgabe der Erfindung besteht darin, ein solches Verfahren zur Verfügung zu stellen, dessen Durchführung mit einem sehr geringen Energieeinsatz verbunden ist. Eine weitere Aufgabe der Erfindung besteht darin, ein solches Verfahren zur Verfügung zu stellen, welches besonders kostengünstig durchführbar ist.

Zur Lösung dieser Aufgaben wird erfindungsgemäß zur Verfügung gestellt ein Verfahren zur Behandlung von feuerfesten keramischen Erzeugnissen mit folgenden Merkmalen:
Zur Verfügungstellung eines feuerfesten keramischen Erzeugnisses gemäß Anspruch 1, umfassend:
   Magnesia und
   wenigstens eines der folgenden Salze: eines oder mehrere Alkalisalze und eines oder mehrere Erdalkalisalze;
Zur Verfügungstellung einer Flüssigkeit auf Basis von Wasser;
Zusammenführen des feuerfesten keramischen Erzeugnisses mit der Flüssigkeit;
Trennen des feuerfesten keramischen Erzeugnisses und der Flüssigkeit.

Der Erfindung liegt die überraschende Erkenntnis zu Grunde, dass der Anteil an Verunreinigungen in Form von Alkali- und Erdalkalisalzen in feuerfesten keramischen Erzeugnissen auf Basis Magnesia dadurch effektiv sowie mit äußerst geringem Energie- und Kostenaufwand reduziert werden kann, dass solch feuerfeste keramische Erzeugnisse auf Basis Magnesia mit einer Flüssigkeit auf Basis von Wasser zusammengeführt werden und anschließend wieder von dieser Flüssigkeit getrennt werden.

Denn erfindungsgemäß hat sich herausgestellt, dass solche Alkali- und Erdalkalisalze bei Kontakt der damit verunreinigten feuerfesten keramischen Erzeugnissen auf Basis Magnesia mit einer Flüssigkeit auf Basis von Wasser schnell und umfassend in der Flüssigkeit in Lösung gehen, so dass der Anteil dieser Alkali- und Erdalkalisalze in dem Erzeugnis bei dessen Kontaktierung mit Wasser reduziert wird. Dies kann beispielsweise über die Messung der elektrischen Leitfähigkeit des Wassers verfolgt werden.

Überraschend ist in Zusammenhang mit dem erfindungsgemäßen Verfahren auch die Erkenntnis, dass die Magnesiaanteile des feuerfesten keramischen Erzeugnisses während des Zusammenführens des Erzeugnisses mit der Flüssigkeit nur in sehr geringem Umfang hydratisieren, also zu Magnesiumhydroxid (Mg(OH)₂) reagieren. Eine solche Annahme hätte vor dem Hintergrund der bekannten, hohen Hydratationsneigung von Magnesia jedoch nahe gelegen.

GB 861,931 schlägt vor, eine verunreinigte, relativ inaktive Magnesia mit einer verdünnten, kaustischen wässrigen Lösung zu schlämmen, um deren Reaktivität zu verbessern.

Das für die Durchführung des erfindungsgemäßen Verfahrens zur Verfügung gestellte feuerfeste keramische Erzeugnis liegt in Form einer gebrauchten feuerfesten Ausmauerung eines Drehrohrofens zum Brennen von Zementklinker ("Zementdrehrohrofen") vor. Dem erfindungsgemäßen Verfahren kann insoweit der folgende Verfahrensschritt vorgeschaltet sein:
Ausbrechen der feuerfesten keramischen Ausmauerung eines Drehrohrofens zum Brennen von Zementklinker, umfassend Magnesia und wenigstens eines der folgenden Salze: eines oder mehrere Alkalisalze und eines oder mehrere Erdalkalisalze.

Diese ausgebrochene Ausmauerung kann anschließend als feuerfestes keramisches Erzeugnis für das erfindungsgemäße Verfahren zur Verfügung gestellt werden.

Bevorzugt wird das feuerfeste keramische Erzeugnis in Form von Schüttgut zur Verfügung gestellt, also in körniger Form.

Erfindungsgemäß hat sich herausgestellt, dass die Magnesiaanteile des dem erfindungsgemäßen Verfahren zu Grunde liegenden feuerfesten keramischen Erzeugnisses auf Basis Magnesia verstärkt zur Hydratation neigen, wenn das feuerfeste keramische Erzeugnis in einer mittleren Korngröße unter 0,1 mm vorliegt. Insoweit kann vorgesehen sein, dass das feuerfeste keramische Erzeugnis, insbesondere soweit dieses in Form von Schüttgut vorliegt, zu wenigstens 90 Masse-%, also beispielsweise auch zu wenigstens 95 Masse-% oder zu 100 Masse-%, in einer Korngröße über 0,1 mm vorliegt, also in den vorgenannten Anteilen beispielsweise auch in einer Korngröße über 0,5 oder 1,0 mm.

Ferner hat sich erfindungsgemäß herausgestellt, dass Alkali- und Erdalkalisalze aus dem feuerfesten keramischen Erzeugnis in reduziertem Umfang in der wasserbasierten Flüssigkeit in Lösung gehen, soweit das feuerfeste keramische Erzeugnis in einer mittleren Korngröße über 50 mm vorliegt. Insoweit kann vorgesehen sein, dass das feuerfeste keramische Erzeugnis, insbesondere soweit dieses in Form von Schüttgut vorliegt, zu wenigstens 90 Masse-%, also beispielsweise auch zu wenigstens 95 Masse-% oder zu 100 Masse-%, in einer Korngröße unter 50 mm vorliegt, also in den vorgenannten Anteilen beispielsweise auch in einer Korngröße unter 40 mm, 30 mm, 20 mm oder 10 mm.

Besonders bevorzugt liegt das feuerfeste keramische Erzeugnis zu 100 % in einer Korngröße zwischen 0,5 und 10 mm vor.

Die hierin gemachten Angaben zur Korngröße sind bestimmt gemäß DIN EN 933-1:2012-03 und gemäß DIN EN 933-2:1996-01.

Soweit dem erfindungsgemäßen Verfahren ein feuerfestes keramisches Erzeugnis in Form einer aus einem Zementdrehrohrofen ausgebrochenen feuerfesten keramischen Ausmauerung zugrundeliegt, kann vorgesehen sein, dass dieses nach dem Ausbrechen und vor dem Zusammenführen mit der Flüssigkeit auf Basis von Wasser zerkleinert wird. Insoweit kann dem erfindungsgemäßen Verfahrensschritt des Ausbrechens der feuerfesten Ausmauerung eines Zementdrehrohrofens der folgende Verfahrensschritt nachgeschaltet sein:
Zerkleinern der ausgebrochenen feuerfesten keramischen Ausmauerung.

Durch die Zerkleinerung der ausgebrochenen Ausmauerung kann diese auf die gewünschte maximale Korngröße zerkleinert beziehungsweise das gewünschte Kornband des für das erfindungsgemäße Verfahren zur Verfügung gestellte feuerfeste keramische Erzeugnis eingestellt werden. Insoweit kann die Korngröße beziehungsweise das Kornband auf die vorbeschriebene Korngröße zerkleinert beziehungsweise eingestellt werden.

Bei dem für das erfindungsgemäße Verfahren zur Verfügung gestellten feuerfesten keramischen Erzeugnis kann es sich grundsätzlich um ein beliebiges feuerfestes keramisches Erzeugnis auf Basis Magnesia handeln. Bevorzugt umfasst das feuerfeste keramische Erzeugnis einen Anteil an Magnesia von wenigstens 60 Masse-%, bezogen auf die Gesamtmasse des feuerfesten keramischen Erzeugnisses. Insofern kann das feuerfeste keramische Erzeugnis Magnesia beispielsweise auch in einem Anteil von wenigstens 70, 80, 85, 90, 95 , 98 oder 99 Masse-% umfassen, jeweils bezogen auf die Gesamtmasse des feuerfesten keramischen Erzeugnisses.

Neben Magnesia und einem oder mehreren Alkali- und/oder Erdalkalisalzen kann das feuerfeste keramische Erzeugnis insbesondere noch eines oder mehrere der folgenden Oxide umfassen: Al₂O₃, Fe₂O₃, ZrO₂, SiO₂ oder MnO.

Nach einer Ausführungsform ist vorgesehen, dass das feuerfeste keramische Erzeugnis zu wenigstens 80 Masse-%, also beispielsweise auch zu wenigstens 85, 90, 95, 98 oder 99 Masse-% eines oder mehrere der folgenden Stoffe umfasst: MgO, Alkalisalze, Erdalkalisalze, Al₂O₃, Fe₂O₃, ZrO₂, SiO₂ oder MnO.

Dabei können die weiteren Oxide Al₂O₃, Fe₂O₃, ZrO₂, SiO₂ und MnO beispielsweise innerhalb der folgenden Massenanteile im feuerfesten keramischen Erzeugnis vorliegen, jeweils bezogen auf die Gesamtmasse des feuerfesten keramischen Erzeugnisses, wobei diese Oxide jeweils einzeln oder in Kombination in den folgenden Massenanteilen vorliegen können:

| | |
|---|---|
| Al₂O₃: | 0 bis 30 Masse-%, also beispielsweise auch wenigstens 1, 2, 3, 4 oder 5 Masse-% und beispielsweise auch höchstens 29, 28, 27, 26, 25, 24, 23, 22 oder 20 Masse-%; |
| Fe₂O₃: | 0 bis 15 Masse-% also beispielsweise auch wenigstens 1, 2 oder 3 Masse-% und beispielsweise auch höchstens 10, 9, 8, 7, 6 oder 5 Masse-%; |
| ZrO₂: | 0 bis 5 Masse-%; |
| SiO₂: | 0 bis 2,5 Masse-%; |
| MnO: | 0 bis 6 Masse-%; |
| CaO: | 0 bis 3 Masse-%. |

Ferner ist bevorzugt vorgesehen, dass das feuerfeste keramische Erzeugnis keine oder nur geringe Anteile an Chromoxid (Cr₂O₃) umfasst, bevorzugt Anteile an Chromoxid unter 1 Masse-%, bezogen auf die Gesamtmasse an feuerfesten keramischen Erzeugnisses, also beispielsweise auch Anteile an Chromoxid unter 0,5 Masse-%.

Mineralogisch kann das Gefüge des feuerfesten keramischen Erzeugnisses weitgehend aus Periklas (MgO) bestehen. Daneben können MgO sowie weitere Oxide im feuerfesten keramischen Erzeugnis beispielsweise auch in Form einer oder mehrerer der folgenden kristallographischen Strukturen vorliegen: Spinell (MgO · Al₂O₃), Pleonast (eisenhaltiger Spinell, also MgO · Al₂O₃ mit Einbau von Fe²⁺- oder Fe³⁺-Ionen), Herzynit (FeO · Al₂O₃) oder Galaxit (MnO · Al₂O₃).

Das für die Durchführung des erfindungsgemäßen Verfahren zur Verfügung gestellte feuerfeste keramische Erzeugnis umfasst wenigstens eines der folgenden Salze: eines oder mehrere Alkalisalze und eines oder mehrere Erdalkalisalze. Das für die Durchführung des erfindungsgemäßen Verfahren zur Verfügung gestellte feuerfeste keramische Erzeugnis kann einen Anteil an Alkali- und Erdalkalisalzen von wenigstens 1 Masse-%, bezogen auf die Gesamtmasse des feuerfesten keramischen Erzeugnisses, umfassen.

Als Alkali- und Erdalkalisalze werden hierin alle Salze der Alkali- oder Erdalkalimetalle bezeichnet, also insbesondere Salze von einem oder mehreren der Alkali- und Erdalkalimetalle Lithium, Natrium, Kalium, Magnesium und Kalzium. Soweit diese Alkali- und Erdalkalimetalle erfindungsgemäß als Salze vorliegen, können diese insbesondere als Chlorid (also mit einem Chlorid-Anion Cl⁻) und/oder als Sulfat (also mit einem Sulfat-Anion SO₄²⁻) vorliegen. Insoweit können die Alkali- und Erdalkalisalze in dem feuerfesten keramischen Erzeugnis erfindungsgemäß beispielsweise als eines oder mehrere der folgenden Salze vorliegen: Lithiumsulfat (Li₂SO₄), Lithiumchlorid (LiCl), Natriumsulfat (Na₂SO₄), Natriumchlorid (NaCl), Kaliumsulfat (K₂SO₄), Kaliumchlorid (KCl), Magnesiumsulfat (MgSO₄), Magnesiumchlorid (MgCl₂), Kalziumsulfat (CaSO₄) und Kalziumchlorid (CaCl₂). Insbesondere können die Alkali- und Erdalkalisalze erfindungsgemäß als eines oder mehrere der folgenden Salze vorliegen: Lithiumsulfat, Lithiumchlorid, Natriumsulfat, Natriumchlorid, Kaliumsulfat oder Kaliumchlorid sowie Mischkristalle, beispielsweise Kalium-Kalziumsulfat. Besonders bevorzugt können die Alkali- und Erdalkalisalze erfindungsgemäß als eines oder mehrere der folgenden Salze vorliegen: Natriumsulfat, Natriumchlorid, Kaliumsulfat oder Kaliumchlorid.

Indem die Alkali- und Erdalkalisalze des feuerfesten keramischen Erzeugnisses in der wasserbasierten Flüssigkeit in Lösung gehen, wird der Anteil dieser Salze in dem feuerfesten keramischen Erzeugnis durch das erfindungsgemäße Verfahren erheblich reduziert. Insofern hat sich erfindungsgemäß herausgestellt, dass durch die Behandlung eines mit Alkali- und Erdalkalisalzen verunreinigten feuerfesten keramischen Erzeugnissen auf Basis Magnesia der Anteil der Alkali- und Erdalkalisalze in dem Erzeugnis zu über 50 Masse-%, also beispielsweise auch zu über 60, 70, 80, 90 oder sogar über 90 Masse-% reduziert werden kann, bezogen auf die Gesamtmasse der Alkali- und Erdalkalisalzen in dem feuerfesten keramischen Erzeugnis vor dessen Behandlung gemäß dem erfindungsgemäßen Verfahren.

Teilweise füllen die Alkali- und Erdalkalisalze bei dem mit diesen Salzen verunreinigten feuerfesten keramischen Erzeugnis praktisch den gesamten offenen Porenraum dieses Erzeugnisses aus. Insoweit kann der Anteil der Alkali- und Erdalkalisalze in dem feuerfesten keramischen Erzeugnis vor der Durchführung des erfindungsgemäßen Verfahrens verhältnismäßig hoch sein. In einer Ausführungsform ist vorgesehen, dass der Anteil der Alkali- und Erdalkalisalze in dem feuerfesten keramischen Erzeugnis bis zu 12 Masse-% beträgt, also beispielsweise auch bis zum 11, 10, 9, 8, 7, 6 oder 5 Masse-%, jeweils bezogen auf die Gesamtmasse des Erzeugnisses. Ferner hat sich erfindungsgemäß herausgestellt, dass der relative Umfang, in welchem der Anteil an Verunreinigungen durch Alkali- und Erdalkalisalzen in einem feuerfesten keramischen Erzeugnis auf Basis Magnesia reduziert werden kann, sinkt, wenn der Anteil an Verunreinigungen an diesen Salzen im Erzeugnis sehr gering ist. Insoweit kann vorgesehen sein, dass nur solche feuerfesten keramischen Erzeugnisse durch das erfindungsgemäße Verfahren behandelt werden, bei denen Alkali- und Erdalkalisalz in einem Mindestanteil im Erzeugnis vorliegen. Erfindungsgemäß kann vorgesehen sein, dass Alkali- und Erdalkalisalze im feuerfesten keramischen Erzeugnis in einem Anteil von wenigstens 1 Masse-% vorliegen, bezogen auf die Gesamtmasse des feuerfesten keramischen Erzeugnisses, also beispielsweise auch in einem Anteil von wenigstens 2, 3 oder 4 Masse-%.

Die für die Durchführung des erfindungsgemäßen Verfahrens zur Verfügung gestellte Flüssigkeit auf Basis von Wasser kann grundsätzlich eine beliebige Flüssigkeit auf Basis von Wasser sein, bevorzugt jedoch reines Wasser. Der besondere Vorteil der Verwendung von Wasser als Flüssigkeit liegt insbesondere auch darin, dass dieses besonders einfach, kostengünstig und umweltschonend zur Verfügung gestellt werden kann. Ein weiterer Vorteil der Verwendung von Wasser als Flüssigkeit besteht insbesondere auch darin, dass bei der Durchführung des erfindungsgemäßen Verfahrens unter Verwendung von Wasser als Flüssigkeit keine besonderen Sicherheitsvorkehrungen in Hinblick auf die mit der Durchführung des erfindungsgemäßen Verfahrens betrauten Personen getroffen werden müssen.

Erfindungsgemäß hat sich herausgestellt, dass bei der Durchführung des erfindungsgemäßen Verfahrens Alkali- und Erdalkalisalze sehr effektiv und umfassend aus mit solchen Salzen verunreinigten feuerfesten keramischen Erzeugnissen entfernt werden, wenn diese Erzeugnisse mit einer Flüssigkeit in Form von Wasser zusammengeführt werden. Dabei gehen diese Salze in dem Wasser in Lösung und sind anschließend aus dem feuerfesten keramischen Erzeugnis entfernt. Die Flüssigkeit, insbesondere also Wasser, mit den darin gelösten Salzen ist nach der Durchführung des erfindungsgemäßen Verfahrens umweltgerecht zu behandeln beziehungsweise zu entsorgen. Aus Kostengründen kann es insoweit vorteilhaft sein, wenn bei der Durchführung des erfindungsgemäßen Verfahrens nur geringe Mengen an Flüssigkeit beziehungsweise Wasser mit darin gelösten Alkali- und Erdalkalisalzen anfallen.

Erfindungsgemäß wurde festgestellt, dass ab einem Mindestverhältnis von Masse der Flüssigkeit zur Masse des feuerfesten keramischen Erzeugnisses die Lösung der Salze aus dem feuerfesten keramischen Erzeugnis praktisch nicht mehr wesentlich ansteigt. Insoweit kann erfindungsgemäß vorgesehen sein, dass das Verhältnis von Masse der Flüssigkeit zur Masse des feuerfesten keramischen Erzeugnisses bei der Durchführung des erfindungsgemäßen Verfahrens auf dieses Mindestverhältnis eingestellt ist, so dass bei einer effektiven Lösung der Salze aus dem feuerfesten keramischen Erzeugnis gleichzeitig nur ein möglichst geringer Anteil an mit den Salzen verunreinigter Flüssigkeit anfällt. Dieses Mindestverhältnis von Masse der Flüssigkeit zur Masse des feuerfesten keramischen Erzeugnisses kann - insbesondere in Abhängigkeit von der Zusammensetzung und der Korngröße des feuerfesten keramischen Erzeugnisses - insbesondere im Bereich vom 0,5 bis 10 liegen. Erfindungsgemäß kann daher vorgesehen sein, dass feuerfestes keramisches Erzeugnis und Flüssigkeit in einem Verhältnis von Masse der Flüssigkeit zur Masse des feuerfesten keramischen Erzeugnisses in einem Bereich von 0,5 bis 10 zusammengeführt werden, also beispielsweise auch in einem solchen Massenverhältnis von wenigstens 1 oder beispielsweise auch in einem solchen Massenverhältnis von höchstens 9, 8, 7, 6, 5, 4 oder 3.

Nachdem das feuerfeste keramische Erzeugnis und die Flüssigkeit erfindungsgemäß zusammengeführt worden sind, lässt man diese für einen Zeitraum zusammengeführt. Dabei hat sich erfindungsgemäß herausgestellt, dass es bei einem zu langen Zeitraum des Zusammengeführtseins zu einer geringfügigen Hydratisierung von Magnesiaanteilen des feuerfesten keramischen Erzeugnisses kommen kann. Andererseits können sich bei einem zu kurzen Zeitraum des Zusammengeführtseins gegebenenfalls Alkali- und Erdalkalisalze nicht in einem gewünschten Umfang aus dem feuerfesten keramischen Erzeugnis lösen. Bevorzugt kann insoweit vorgesehen sein, dass feuerfestes keramisches Erzeugnis und Flüssigkeit nach ihrem Zusammenführen für einen Zeitraum von höchstens 60 Minuten zusammengeführt bleiben, also beispielsweise auch für einen Zeitraum von höchstens 50, 40, 30, 20 oder 10 Minuten. Ferner kann vorgesehen sein, dass das feuerfeste keramische Erzeugnis und die Flüssigkeit für einen Zeitraum von wenigstens 5 Minuten zusammengeführt bleiben also beispielsweise auch für einen Zeitraum von wenigstens 6, 7, 8, 9 oder 10 Minuten.

Nach einer Ausführungsform ist vorgesehen, dass das feuerfeste keramische Erzeugnis und die Flüssigkeit nach ihrer Zusammenführung gemischt werden. Dieses Mischen kann während der gesamten Dauer oder eines Teils der Dauer des Zusammengeführtseins erfolgen.

Das feuerfeste keramische Erzeugnis und die Flüssigkeit können in einem Behältnis zusammengeführt werden, beispielsweise in einer Wanne oder in einer Trommel. Beispielsweise können das feuerfeste keramische Erzeugnis und das Wasser in einer Mischtrommel zusammengeführt werden, so dass sie dort gleichzeitig gemischt werden können.

Zur Trennung des feuerfesten keramischen Erzeugnisses und der Flüssigkeit kann beispielsweise das feuerfeste keramische Erzeugnis aus dem Wasser entnommen werden, beispielsweise über ein Sieb, einen Rost oder dergleichen. Alternativ kann beispielsweise das Wasser aus einem Behältnis, in welchem das feuerfeste keramische Erzeugnis und die Flüssigkeit zusammengeführt worden waren, abgelassen werden. Um die Trennung der Flüssigkeit von dem feuerfesten keramischen Erzeugnis zu beschleunigen, kann vorgesehen sein, dass das feuerfeste keramische Erzeugnis getrocknet wird, beispielsweise in einem Trockenaggregat, zum Beispiel in einem Trockenofen.

Das von der Flüssigkeit getrennte, also getrocknete feuerfeste keramische Erzeugnis kann anschließend als Rohstoff zur Herstellung von feuerfesten keramischen Produkten zur Verfügung gestellt werden. Bei solchen Produkten kann es sich insbesondere um feuerfeste keramische Produkte zur Ausmauerung von Drehrohröfen handeln, insbesondere zur Ausmauerung von Zementdrehrohröfen.

Überraschend hat sich herausgestellt, dass ein durch das erfindungsgemäße Verfahren behandeltes feuerfestes keramisches Erzeugnis einen hervorragenden Rohstoff zur Herstellung solch feuerfester keramischer Produkte darstellt. Denn nach Behandlung eines solchen Erzeugnisses durch das erfindungsgemäße Verfahren weist das feuerfeste keramische Erzeugnis Verunreinigungen in Form von Alkali- oder Erdalkalisalzen nur noch in solch geringen Konzentrationen auf, dass ein mit solch geringen Anteilen an Salzen verunreinigtes feuerfestes keramisches Erzeugnis die Eigenschaften eines daraus hergestellten feuerfesten keramischen Produktes nicht oder nur unwesentlich negativ beeinträchtigt.

Darüber hinaus wurde überraschend festgestellt, dass die feuerfesten Eigenschaften eines unter Verwendung eines durch das erfindungsgemäße Verfahren behandelten feuerfesten keramischen Erzeugnisses hergestellten feuerfesten keramischen Produktes teilweise sogar verbessert werden können. Beispielsweise kann die Wärmeleitfähigkeit eines feuerfesten keramischen Produktes auf Basis Magnesia, welches unter Verwendung von durch das erfindungsgemäße Verfahren behandelten feuerfesten keramischen Erzeugnisses hergestellten worden ist, verringert werden. Die Erfinder vermuten, dass dies darauf zurückzuführen ist, dass ein durch das erfindungsgemäße Verfahren behandeltes feuerfestes keramisches Erzeugnis in der Regel eine geringere Rohdichte sowie eine höhere offene Porosität als ein neu gewonnener, also ungebrauchter und nicht rezyklierter Rohstoff auf Basis Magnesia aufweist. Weitere feuerfeste Eigenschaften des feuerfesten keramischen Produktes, beispielsweise seine Kaltdruckfestigkeit und Heißfestigkeit, werden durch Anteile des durch das erfindungsgemäße Verfahren behandelten feuerfesten keramischen Erzeugnisses nicht oder nur unwesentlich beeinflusst.

Vor diesem Hintergrund kann das erfindungsgemäße Verfahren auch den weiteren Verfahrensschritt umfassen, wonach das von der Flüssigkeit getrennte feuerfeste keramische Erzeugnis und wenigstens ein weiterer feuerfester keramischer Rohstoff auf Basis Magnesia zusammengeführt und anschließend gemeinsam zu einem feuerfesten keramischen Produkt weiterverarbeitet werden. Bei einem solchen feuerfesten keramischen Produkt kann es sich, wie zuvor ausgeführt, beispielsweise insbesondere um einen feuerfesten Stein zur Ausmauerung von Zementdrehrohröfen handeln. Die Weiterverarbeitung von zusammengeführtem feuerfesten keramischen Erzeugnis und feuerfestem keramischen Rohstoff auf Basis Magnesia kann gemäß den aus dem Stand der Technik bekannten Technologien zur Herstellung von feuerfesten keramischen Produkten erfolgen, also beispielsweise durch Vermischen des feuerfesten keramischen Erzeugnisses mit dem feuerfesten keramischen Rohstoff, dem anschließenden Verpressen zu einem geformten, ungebrannten keramischen Erzeugnis (einem Grünkörper), einem etwaigen anschließenden Trocknen des Grünkörpers und schließlich einem Brennen des Grünkörpers, bei dem der Grünkörper zu einem feuerfesten keramischen Produkt sintert.

Gegenstand der Erfindung ist insoweit auch die Verwendung des gemäß dem erfindungsgemäßen Verfahren von der Flüssigkeit getrennten feuerfesten keramischen Erzeugnisses als Rohstoff zur Herstellung eines feuerfesten keramischen Produktes.

Soweit das durch das erfindungsgemäße Verfahren behandelte feuerfeste keramische Erzeugnis als Rohstoff zur Herstellung eines feuerfesten keramischen Produktes verwendet und dabei mit wenigstens einem Rohstoff auf Basis Magnesia zu einem feuerfesten keramischen Produkt weiterverarbeitet wird, kann es sich bei diesem wenigstens einen feuerfesten keramischen Rohstoff grundsätzlich um einen beliebigen, jedoch nicht rezyklierten Rohstoff auf Basis Magnesia handeln. Insbesondere kann es sich bei dem wenigstens einen feuerfesten keramischen Rohstoff um einen frisch gewonnenen, also nicht recyklierten Rohstoff in Form wenigstens eines der folgenden Rohstoffe handeln: Sintermagnesia, Schmelzmagnesia oder Magnesiaspinell.

Erfindungsgemäß wurde festgestellt, dass sich durch die Behandlung eines feuerfesten keramischen Erzeugnisses mittels des erfindungsgemäßen Verfahrens dessen Porosität geringfügig erhöhen beziehungsweise dessen Rohdichte sinken kann. Ferner kann ein durch das erfindungsgemäße Verfahren behandeltes feuerfestes keramisches Erzeugnis noch geringe Reste an Alkali- und/oder Erdalkalisalzen aufweisen.

Weitere Merkmale der Erfindung ergeben sich aus den Ansprüchen sowie dem nachfolgenden Ausführungsbeispiel der Erfindung.

Sämtliche der hierin offenbarten Merkmale der Erfindung können, einzeln oder in Kombination, beliebig miteinander kombiniert sein.

Ein Ausführungsbeispiel der Erfindung wird nachfolgend näher erläutert.

Dabei betrifft das Ausführungsbeispiel ein erfindungsgemäßes Verfahren zur Behandlung eines feuerfesten keramischen Erzeugnisses in Form einer gebrauchten feuerfesten Ausmauerung eines Zementdrehrohrofens.

In einem ersten Verfahrensschritt wurde dabei die feuerfeste Ausmauerung eines Zementdrehrohrofens, welche Magnesia und mehrere Alkalisalze umfasste, aus dem Drehrohrofen ausgebrochen. Bei der feuerfesten Ausmauerung handelte es sich um feuerfeste keramische Steine auf Basis von Magnesia mit weiteren Anteilen an Hercynit und Magnesiaspinell. Diese, durch die Alkalisalze verunreinigten Steine, wiesen die folgende Zusammensetzung auf, jeweils in Masse-% und bezogen auf die Gesamtmasse der Steine:

| | |
|---|---|
| MgO: | 78,01 Masse-% |
| Al₂O₃: | 6,56 Masse-% |
| Fe₂O₃: | 0,78 Masse-% |
| Alkalisalze (Na₂SO₄, NaCl, K₂SO₄ und KCl): | 7,85 Masse-% |
| Sonstige: | 6,80 Masse-%. |

Das nach dem Ausbrechen aus dem Drehrohrofen zunächst in grober Stückung vorliegende Ausbruchmaterial wurde durch einen Brecher auf eine gewünschte Korngröße gebrochen. Dabei wurde das Ausbruchmaterial derart gebrochen und aufbereitet, dass dieses anschließend zu 100 Masse-% in einer mittleren Korngröße im Bereich zwischen 0,5 und 10 mm vorlag.

Das entsprechend aufbereitete Ausbruchmaterial beziehungsweise feuerfeste keramische Erzeugnis wurde anschließend in einer Mischtrommel mit einer Flüssigkeit in Form von Wasser zusammengeführt. Das Massenverhältnis von Wasser zu feuerfestem keramischen Erzeugnis betrug dabei etwa 1,5. Anschließend ließ man das feuerfeste keramische Erzeugnis und das Wasser für eine Dauer von etwa 10 Minuten in der Mischtrommel zusammengeführt. Während dieser Dauer wurden das feuerfeste keramische Erzeugnis und das Wasser durch eine Rotation der Mischtrommel innig miteinander vermischt. Während dieser Dauer lösten sich erhebliche Anteile der Alkalisalze des feuerfesten keramischen Erzeugnisses im Wasser, so dass der Anteil der Alkalisalze in dem feuerfesten keramischen Erzeugnis von zunächst 7,85 Masse-%, bezogen auf die Gesamtmasse des feuerfesten keramischen Erzeugnisses, auf etwa 2,70 Masse-% und damit insgesamt um etwa 66 % reduziert werden konnte.

In einem nächsten Verfahrensschritt wurden das feuerfeste keramische Erzeugnis und das Wasser voneinander getrennt. Hierzu wurde das Wasser mit den darin gelösten Alkalisalzen zunächst aus der Mischtrommel ausgeleitet und einer umweltgerechten Entsorgung zugeführt. Ferner wurde das feuerfeste keramische Erzeugnis in einem Trockenaggregat vollständig getrocknet.

Das danach gewonnene, durch das erfindungsgemäße Verfahren behandelte feuerfeste keramische Erzeugnis wurde als Rohstoff zur Herstellung von feuerfesten keramischen Produkten in Form von Steinen zur Ausmauerung von Zementdrehrohröfen verwendet. Hierzu wurde das behandelte, rezyklierte feuerfeste keramische Erzeugnis mit weiteren Rohstoffen in Form von Sintermagnesia und Magnesiaspinell zusammengeführt, vermischt, verpresst und zu feuerfesten keramischen Steinen gesintert.

In der nachfolgenden Tabelle 1 sind mit A bis H bezeichnete, feuerfeste keramische Produkte angegeben. Im oberen Teil der Tabelle 1 sind die Anteile der Komponenten der Versätze in Masse-% angegeben, aus denen die Produkte A bis H jeweils hergestellt wurden, und zwar jeweils bezogen auf die Gesamtmasse der Versätze. Im unteren Teile der Tabelle 1 sind physikalische Eigenschaften der Produkte A bis H angegeben.

Die verwendete Sintermagnesia wies einen Anteil an MgO, bezogen auf die Sintermagnesia, von 96,0 Masse-% auf.

'ZDO-Ausbruch behandelt' bezeichnet die gemäß dem vorstehenden Ausführungsbeispiel erfindungsgemäß behandelte feuerfeste Ausmauerung eines Zementdrehrohrofens. 'ZDO-Ausbruch unbehandelt' bezeichnet die dem vorstehenden Ausführungsbeispiel zugrundeliegende, feuerfeste Ausmauerung eines Zementdrehrohrofens, jedoch nicht erfindungsgemäß behandelt.

Die physikalischen Eigenschaften wurden gemäß den folgenden Normen bestimmt:
Rohdichte und offene Porosität gemäß DIN EN 993-1:1995-04
Kaltdruckfestigeit gemäß DIN EN 993-5:1998-12
Heißfestigkeit gemäß DIN EN ISO 1893:2008-09

**Tabelle 1**

| **Komponente** | **A** | **B** | **C** | **D** | **E** | **F** | **G** | **H** |
|---|---|---|---|---|---|---|---|---|
| Sintermagnesia > 0,1-5 mm | 55 | 30 | | 30 | 30 | 30 | 30 | 30 |
| Sintermagnesia > 0-0,1 mm | 29 | 29 | 29 | 29 | 29 | 29 | 29 | 29 |
| MA-Spinell (Magnesiaaluminatspinell) | 16 | 11 | 11 | 11 | 11 | 11 | 11 | 11 |
| ZDO-Ausbruch behandelt 0,1-5 mm | | 30 | 60 | | 30 | | 30 | |
| ZDO-Ausbruch unbehandelt 0,1-5 mm | | | | 30 | | 30 | | 30 |
| Rohdichte [g/cm³] | 2,96 | 2,94 | 2,87 | 2,91 | 2,91 | 2,89 | 2,94 | 2,91 |
| Offene Porosität [Vol.-%] | 16,1 | 16,3 | 18,4 | 17,0 | 17,4 | 17,8 | 16,9 | 17,7 |
| Kaltdruckfestigkeit [MPa] | 65 | 59 | 44 | 46 | 59 | 49 | 55 | 48 |
| Heißfestigkeit t₀ [°C] | 1464 | 1441 | 1460 | 1338 | 1444 | 1267 | 1424 | 1410 |
| Heißfestigkeit t_{0,5} [°C] | 1697 | 1679 | 1662 | 1605 | 1696 | 1569 | 1642 | 1648 |

Produkt A ist ein übliches feuerfestes keramisches Produkt auf Basis der Rohstoffe Sintermagnesia und MA-Spinell.

Bei den Produkten B bis H wurde ein Teil der Sintermagnesia und des MA-Spinells durch einen Rohstoff in Form einer gebrauchten feuerfesten Ausmauerung eines Zementdrehrohrofens ersetzt, und zwar bei den Produkten B, C, E und G durch den Rohstoff "ZDO-Ausbruch behandelt" und bei den Produkten D, F und H durch den Rohstoff "ZDO-Ausbruch unbehandelt". Da die Rohstoffe "ZDO-Ausbruch behandelt" und "ZDO-Ausbruch unbehandelt" Anteile an Al₂O₃ aufwiesen, war der Anteil der Oxide MgO und Al₂O₃ bei allen Produkten A bis H etwa gleich.

Gut zu erkennen ist in Tabelle 1, dass die Werte der Kaltdruckfestigkeit und Heißfestigkeit der Produkte B, C, E und G in etwa den Werten des Produktes A entsprechen, während diese Werte bei den Produkten D, F und H signifikant geringer sind.

Ferner liegen bei den Produkten B, C, E und G die Werte für die Rohdichte unter und die Werte für die offene Porosität über den entsprechenden Werten des Produktes A. Hieraus resultiert eine geringere Wärmeleitfähigkeit der Produkte B, C, E und G gegenüber dem Produkt A, so dass die Produkte B, C, E und G eine gute thermische Isolierfähigkeit aufweisen.

Gleichzeitig lassen sich die Produkte B, C, E und G kostengünstiger zur Verfügung stellen als Produkt A, da für die Herstellung der Produkte B, C, E und G zu erheblichen Anteilen kostengünstiger, rezyklierter Rohstoff in Form der gebrauchten feuerfesten Ausmauerung eines Zementdrehrohrofens verwendet werden kann.

## Patentansprüche

1. Verfahren zur Behandlung von feuerfesten keramischen Erzeugnissen mit folgenden Merkmalen:
1.1 Zur Verfügungstellung einer gebrauchten feuerfesten keramischen Ausmauerung eines Drehrohrofens zum Brennen von Zementklinker, umfassend:
1.1.1 Magnesia und
1.1.2 wenigstens eines der folgenden Salze: eines oder mehrere Alkalisalze und eines oder mehrere Erdalkalisalze;
1.2 Zur Verfügungstellung einer Flüssigkeit auf Basis von Wasser;
1.3 Zusammenführen des feuerfesten keramischen Erzeugnisses mit der Flüssigkeit;
1.4 Trennen des feuerfesten keramischen Erzeugnisses und der Flüssigkeit.

2. Verfahren nach Anspruch 1, welches den folgenden, dem Verfahrensschritt 1.1 vorgeschalteten Verfahrensschritt umfasst: Ausbrechen der feuerfesten keramischen Ausmauerung eines Drehrohrofens zum Brennen von Zementklinker, umfassend Magnesia und wenigstens eines der folgenden Salze: eines oder mehrere Alkalisalze und eines oder mehrere Erdalkalisalze.

3. Verfahren nach wenigstens einem der vorhergehenden Ansprüche, bei dem das feuerfeste keramische Erzeugnis in Form von Schüttgut zur Verfügung gestellt wird.

4. Verfahren nach wenigstens einem der vorhergehenden Ansprüche, wobei das feuerfeste keramische Erzeugnis zu wenigstens 90 Masse-%, bezogen auf die Masse des feuerfesten keramischen Erzeugnisses, in einer Korngröße unter 50 mm vorliegt.

5. Verfahren nach wenigstens einem der vorhergehenden Ansprüche, wobei das feuerfeste keramische Erzeugnis zu wenigstens 90 Masse-%, bezogen auf die Masse des feuerfesten keramischen Erzeugnisses, in einer Korngröße über 0,1 mm vorliegt.

6. Verfahren nach Anspruch 2, welches den folgenden, dem Verfahrensschritt nach Anspruch 2 nachgeschalteten und dem Verfahrensschritt 1.1 nach Anspruch 1 vorgeschalteten Verfahrensschritt umfasst:
Zerkleinern der ausgebrochenen Ausmauerung.

7. Verfahren nach Anspruch 6, bei dem die Ausmauerung auf eine Korngröße gemäß wenigstens einem der Ansprüche 4 oder 5 zerkleinert wird.

8. Verfahren nach wenigstens einem der vorhergehenden Ansprüche, bei dem das feuerfeste keramische Erzeugnis einen Anteil an Magnesia von wenigstens 60 Masse-%, bezogen auf die Masse des feuerfesten keramischen Erzeugnisses, umfasst.

9. Verfahren nach wenigstens einem der vorhergehenden Ansprüche, bei dem das feuerfeste keramische Erzeugnis einen Anteil an Alkali- oder Erdalkalisalzen von wenigstens 1 Masse-%, bezogen auf die Masse des feuerfesten keramischen Erzeugnisses, umfasst.

10. Verfahren nach wenigstens einem der vorhergehenden Ansprüche, bei dem Wasser als Flüssigkeit vorliegt.

11. Verfahren nach wenigstens einem der vorhergehenden Ansprüche, welches die folgenden, weiteren Verfahrensschritte umfasst:
Zusammenführen des von der Flüssigkeit getrennten feuerfesten keramischen Erzeugnisses mit wenigstens einem weiteren feuerfesten keramischen Rohstoff auf Basis Magnesia;
Weiterverarbeiten des zusammengeführten feuerfesten keramischen Erzeugnisses und des wenigstens einen weiteren feuerfesten keramischen Rohstoffes zu einem feuerfesten keramischem Produkt.

## Claims

1. A method for treating refractory ceramic products, said method having the following features:
1.1 providing a used refractory ceramic lining of a rotary kiln for burning cement clinker, comprising:
1.1.1 magnesia and
1.1.2 at least one of the following salts: one or more alkali salts and one or more alkaline earth salts;
1.2 providing a water-based liquid;
1.3 combining the refractory ceramic product with the liquid;
1.4 separating the refractory ceramic product and the liquid.

2. The method according to claim 1, which method comprises the following method step preceding method step 1.1:
removing the refractory ceramic lining of a rotary kiln for burning cement clinker, said lining comprising magnesia and at least one of the following salts: one or more alkali salts and one or more alkaline earth salts.

3. The method according to at least one of the preceding claims, in which the refractory ceramic product is provided in the form of bulk material.

4. The method according to at least one of the preceding claims, wherein the refractory ceramic product is present to an extent of at least 90 mass %, in relation to the mass of the refractory ceramic product, with a grain size of less than 50 mm.

5. The method according to at least one of the preceding claims, wherein the refractory ceramic product is present to an extent of at least 90 mass %, in relation to the mass of the refractory ceramic products, with a grain size of more than 0.1 mm.

6. The method according to claim 2, which method comprises the following method step after the method step according to claim 2 and before the method step 1.1 according to claim 1:
comminuting the removed lining.

7. The method according to claim 6, in which the lining is comminuted to a grain size according to at least one of claims 4 or 5.

8. The method according to at least one of the preceding claims, in which the refractory ceramic product comprises a content of magnesia of at least 60 mass %, in relation to the total mass of the refractory ceramic product.

9. The method according to at least one of the preceding claims, in which the refractory ceramic product comprises a content of alkali or alkaline earth salts of at least 1 mass %, in relation to the total mass of the refractory ceramic product.

10. The method according to at least one of the preceding claims, in which water is provided as liquid.

11. The method according to at least one of the preceding claims, which method comprises the following further method steps:
combining the refractory ceramic product separated from the liquid with at least one further magnesia-based refractory ceramic raw material; further processing the combined refractory ceramic product and the at least one further refractory ceramic raw material to provide a refractory ceramic product.

## Revendications

1. Procédé, destiné au traitement de produits en céramique réfractaire, présentant les caractéristiques suivantes :
1.1 mise à disposition d'une maçonnerie en céramique réfractaire utilisée d'un four tubulaire rotatif, destiné à la cuisson de clinker de ciment, comprenant :
1.1.1 de la magnésie et
1.1.2 au moins l'un des sels suivants : un ou plusieurs sels alcalins et un ou plusieurs sels alcalino-terreux ;
1.2 mise à disposition d'un liquide sur la base d'eau ;
1.3 réunion du produit en céramique réfractaire et du liquide ;
1.4 séparation du produit en céramique réfractaire et du liquide.

2. Procédé selon la revendication 1, lequel comprend l'étape de procédé suivante, en amont de l'étape de procédé 1.1 :
éclatement de la maçonnerie en céramique réfractaire d'un four tubulaire rotatif destiné à la cuisson de clinker de ciment, comprenant de la magnésie et au moins l'un des sels suivants : un ou plusieurs sels alcalins et un ou plusieurs sels alcalino-terreux.

3. Procédé selon au moins l'une quelconque des revendications précédentes, lors duquel on met à disposition le produit en céramique réfractaire sous la forme d'un produit en vrac.

4. Procédé selon au moins l'une quelconque des revendications précédentes, le produit en céramique réfractaire se présentant à raison d'au moins 90 % en masse, en rapport à la masse du produit en céramique réfractaire, avec une grosseur de grains inférieure à 50 mm.

5. Procédé selon au moins l'une quelconque des revendications précédentes, le produit en céramique réfractaire se présentant à raison d'au moins 90 % en masse, en rapport à la masse du produit en céramique réfractaire, avec une grosseur de grains supérieure à 0,1 mm.

6. Procédé selon la revendication 2, lequel présente l'étape de procédé suivante, en aval de l'étape de procédé selon la revendication 2 et en amont de l'étape de procédé 1.1 selon la revendication 1 :
broyage de la maçonnerie éclatée.

7. Procédé selon la revendication 6, lors duquel on broie la maçonnerie à une grosseur de grains selon au moins l'une quelconque des revendications 4 ou 5.

8. Procédé selon au moins l'une quelconque des revendications précédentes, lors duquel le produit en céramique réfractaire comprend une part de magnésie d'au moins 60 % en masse, en rapport à la masse du produit en céramique réfractaire.

9. Procédé selon au moins l'une quelconque des revendications précédentes, lors duquel le produit en céramique réfractaire comprend un part de sels alcalins ou alcalino-terreux d'au moins 1 % en masse, en rapport à la masse du produit en céramique réfractaire.

10. Procédé selon au moins l'une quelconque des revendications précédentes, lors duquel l'eau est présente en tant que liquide.

11. Procédé selon au moins l'une quelconque des revendications précédentes, lequel comprend les étapes de procédé supplémentaires suivantes :
réunion du produit en céramique réfractaire séparé du liquide avec au moins une matière première en céramique réfractaire supplémentaire sur base de magnésie ;
traitement ultérieur du produit en céramique réfractaire réuni et de l'au moins une matière première en céramique réfractaire supplémentaire en un produit en céramique réfractaire.
